# EUROPEAN PATENT SPECIFICATION

(11) **EP 2 857 717 B1**
(45) Date of publication and mention of the grant of the patent: **05.10.2016**
(21) Application number: 14814684.8
(22) Date of filing: 10.07.2014
(51) Int. Cl.: F16F 15/02, E04H 9/02

(54) **SLIDING SEISMIC ISOLATION DEVICE**
SEISMISCHE GLEITISOLATIONSVORRICHTUNG
DISPOSITIF D'ISOLATION SISMIQUE À COULISSEMENT

(30) Priority: 25.07.2013 JP 2013154587
(43) Date of publication of application: 08.04.2015
(73) Proprietor: Nippon Steel & Sumikin Engineering Co., Ltd., Tokyo 141-8604 (JP); Toray Industries, Inc., Tokyo, 103-8666 (JP)
(72) Inventor: NAKAMURA Hideji, Tokyo 141-8604 (JP); NISHIMOTO Koji, Tokyo 141-8604 (JP); NINOMIYA Yuki, Otsu-shi Shiga 520-2141 (JP); TSUCHIKURA Hiroshi, Otsu-shi Shiga 520-2141 (JP); SUGANO Koji, Otsu-shi Shiga 520-2141 (JP)
(74) Representative: Denison, Christopher Marcus
(86) International application number: PCT/JP2014/068406
(87) International publication number: WO 2015/012115

(56) References cited:
- WO-A1-2008/096378
- WO-A1-2009/054339
- WO-A1-2012/114246
- DE-A1-102005 060 375
- JP-A- 2002 213 101
- JP-A- 2008 150 724
- JP-B2- 4 848 889
- JP-U- H04 101 474
- US-A- 4 644 714

## Description

### Technical Field

The present invention relates to a sliding seismic isolation device including upper and lower shoes and a slider interposed between them.

### Background Art

In Japan, which is an earthquake-prone country, a variety of quake resistant techniques, seismic isolation techniques, and vibration control techniques, such as techniques against seismic force and techniques for reducing seismic force on buildings, have been developed for a variety of constructions, such as buildings, bridges, elevated roads, and single-family houses, and have been applied to a variety of constructions.

In particular, seismic isolation techniques, which are the techniques for reducing seismic force on constructions, can effectively reduce vibrations in constructions when earthquakes occur. According to the seismic isolation techniques, a seismic isolation device is provided between a base, which is a lower structure, and an upper structure so that transmission of vibration of the base, which occurs due to an earthquake, to the upper structure is reduced and vibration of the upper structure is thus reduced. Thus, the structure stability is ensured. Such a seismic isolation device is effective not only when an earthquake occurs but also for reducing the influence of traffic vibration, which always acts upon the construction, on the upper structure.

Examples of seismic isolation devices include devices with a variety of configurations, such as a lead plug-containing laminated rubber bearing device, a high damping laminated rubber bearing device, a device that combines a laminated rubber bearing and a damper, and a sliding seismic isolation device. Above all, the sliding seismic isolation device will be exemplarily described with reference to its general structure. A sliding seismic isolation device typically includes upper and lower shoes each having a sliding surface with a curvature, a columnar slider interposed between the upper and lower shoes and having upper and lower surfaces that are in contact with and have the same curvatures as the upper and lower shoes, respectively. Such a sliding seismic isolation device is also referred to as a seismic isolation device with slidable upper and lower spherical surfaces or a double-concave seismic isolation device.

In this type of seismic isolation device, the operation performance of the upper and lower shoes is dominated by the coefficient of friction between the upper and lower shoes and the slider interposed between them or by frictional force that corresponds to the coefficient of friction multiplied by the weight.

By the way, in the conventional sliding seismic isolation device, the reference contact pressure of a slider is less than or equal to 20 MPa. Therefore, when the weight of a construction is increased by an increase in the height thereof or the like, there is no way other than increasing the size of the sliding seismic isolation device correspondingly so that the device has planar dimensions that can withstand the load of the construction. This results in lower cost competitiveness of the device in comparison with other types of seismic isolation devices, such as laminated rubber seismic isolation devices. Thus, such a sliding seismic isolation device has come to be used less frequently.

It should be noted that when a slider formed of steel is applied, the slider can be machined with high precision as it is mechanically machined. However, as there is a large variation in the coefficient of friction, and as the contact pressure dependence and the velocity dependence of the coefficient of friction are high, the range between the upper and lower limits of the coefficient of friction is large. Thus, the earthquake response is likely to vary, which is problematic. Therefore, even if such a slider can prevent collapse of a building, the slider is difficult to be a constituent member of a high-performance seismic isolation device that can have PML (probable maximum loss) that is close to zero and can cause no damage to furniture and fixtures and the like.

Patent Literature 1 discloses a sliding seismic isolation device including substrates, each of which has a laminated body of fiber woven fabric-reinforced thermosetting synthetic resin, and a slider having surface layer materials that are integrally joined to the upper and lower surfaces of the respective substrates.

Such a slider is formed by superposing plain-woven PTFE fibers or by superposing plain-woven PTFE fibers, a woven fabric, and a plain-woven cotton cloth. A slider with such a structure is expected to have reduced frictional properties derived from PTFE.

However, as is clearly shown in the experimental conditions disclosed in Patent Literature 1, the contact pressure of the slider disclosed in Patent Literature 1 is also 19.6N/mm² (19.6 MPa), which is less than 20 MPa. Thus, it would be impossible to solve the problem resulting from the low contact pressure of the slider described above.

Patent literature 2 discloses a sliding seismic isolation device including concave upper and lower shoes, between which there are arranged two intermediate elements, each posessing a convex surface slidable along the concave surfaces of the shoes, and coupled to each other through a contact between a spherical surface and a plane to permit relative rotation substantially without sliding. The convex surface may be made of PTFE.

Patent literature 3 discloses a sliding seismic isolation device including a concave lower shoe and an upper supporting pillar having a concave surface. Between the two concave surfaces there is arranged a sliding bearing element. The sliding surface of the bearing against the concave lower shoe may be formed from PTFE or PTFE and lead-filled bronze. The bearing interface layer between the bearing element and the supporting pillar is lubricated, for example with graphite or silicon-based lubricant.

### Citation List

### Patent Literature

Patent Literature 1: JP 4848889 B
Patent Literature 2: WO 2008/096378 A1
Patent Literature 3: US 4644714 A

### Summary of Invention

### Technical Problem

The present invention has been made in view of the foregoing problems. It is an object of the present invention to provide a high-performance sliding seismic isolation device with a slider that realizes a contact pressure of 60 MPa.

### Solution to Problem

In order to achieve the object, the sliding seismic isolation device in accordance with the present invention includes an upper shoe and a lower shoe, the upper and lower shoes each having a sliding surface with a curvature; and a columnar steel slider disposed between the upper and lower shoes, the slider having an upper surface and a lower surface that are in contact with the upper and lower shoes, respectively, and have curvatures. Each of the upper and lower surfaces of the slider has a double-woven fabric layer, the double-woven fabric layer containing PTFE fibers and fibers with higher tensile strength than that of the PTFE fibers, and the PTFE fibers being arranged on the sides of the double-woven fabric layers that face the sliding surfaces of the upper and lower shoes.

In the sliding seismic isolation device of the present invention, a steel slider is used to maintain high contact pressure of the slider, and a double-woven fabric layer is provided on each of the upper and lower surfaces of the slider that are in contact with the sliding surfaces of the upper and lower shoes. More specifically, a double-woven fabric layer, which contains PTFE fibers and fibers with higher tensile strength than that of the PTFE fibers, is fixed on the body of the slider such that the PTFE fibers are arranged on the sides of the sliding surfaces, whereby it is possible to provide a sliding seismic isolation device with high seismic isolation performance while ensuring a contact pressure of 60 MPa.

As the PTFE fibers are arranged on the upper and lower surfaces of the slider on the sides of the sliding surfaces of the upper and lower shoes, it is possible to provide high slidability under a high contact pressure of about 60 MPa.

Further, when a double-woven fabric layer containing PTFE fibers is applied, the PTFE fibers that have relatively low tensile strength and thus have low squash resistance when subjected to a load, are easily squashed when subjected to repetitive vibrations (i.e, pressure sliding force) in the pressed state. However, the squashed PTFE fibers remain in the fibers that have relatively higher tensile strength than that of the PTFE fibers and thus have higher squash resistance, at least some of the PTFE fibers can face the sliding surfaces of the upper and lower shoes. Thus, excellent slidability of the PTFE fibers can be provided. This leads to an improvement of the durability of the sliding seismic isolation device with desired seismic isolation performance.

Examples of the "fibers with higher tensile strength than that of the PTFE fibers" include a variety of resin fibers, such as nylon 6 and polyethylene terephthalate (PET). In particular, PPS fibers with excellent chemical resistance and hydrolysis resistance as well as extremely high tensile strength are desirably used.

The body of the steel slider and the double-woven fabric layers are bonded and fixed to each other with an adhesive. For example, when PPS fibers are used as the fibers with higher tensile strength than that of the PTFE fibers, adhesiveness to the surface of the body of the steel slider can be significantly higher than when the PTFE fibers are used. Thus, it is advantageous to apply double-woven fabric layers such that the PTFE fibers are arranged on the sides of the sliding surfaces of the shoes and the PPS fibers and the like are arranged on the side of the body of the slider.

The inventors have verified that a repetition durability of greater than or equal to 100 repetitions is provided when the contact pressure is 60 MPa and the coefficient µ of kinetic friction is in the range of about 4 to 6 % (µ = 0.04 to 0.06). Accordingly, when the sliding seismic isolation device of the present invention is applied, it is possible to achieve high-performance seismic isolation in which the response acceleration of the top floor of a building is less than or equal to 100 gal.

Further, it has been verified that if the own natural period T when the slider slides on the sliding surfaces is in the range of 4.5 to 8 seconds and the coefficient µ of kinetic friction between the sliding surfaces and the slider is in the range of 0.03 to 0.07, the response shear coefficient CB in response to an earthquake ground motion of level 2 (L2) can be less than or equal to 0.2, and the response displacement δ in response to an earthquake ground motion of level 3 (L3, which is an earthquake ground motion with a level 1.5 times that of level 2) can be less than 80 cm. It should be noted that a response displacement δ that is over 80 cm means that the seismic isolation performance is extremely high. However, as a device that exerts such seismic isolation performance requires an extremely high production cost, producing a device with a response displacement of about 60 cm would be reasonable in terms of the production cost. Thus, a device with a response displacement of less than 80 cm is desirably produced.

More preferably, when the own natural period T is 4.5 seconds, the response displacement δ can be controlled to about 60 seconds if the coefficient µ of kinetic friction is in the range of 0.04 to 0.05; when the own natural period T is 6 seconds, the response shear coefficient CB can be less than 0.15 and the response displacement δ can be less than 70 seconds if the coefficient µ of kinetic friction is in the range of 0.03 to 0.05; and when the own natural period T is 8 seconds, the response shear coefficient CB can be less than 0.15 and the response displacement δ can be less than 70 seconds if the coefficient µ of kinetic friction is in the range of 0.04 to 0.05. All of such ranges can be said to be preferable.

### Advantageous Effects of Invention

As can be understood from the foregoing description, according to the sliding seismic isolation device of the present invention, a double-woven fabric layer, which contains PTFE fibers and fibers with higher tensile strength than that of the PTFE fibers, is formed on each of the upper and lower surfaces of a steel slider that are in contact with the sliding surfaces of the upper and lower shoes, respectively, such that the PTFE fibers are arranged on the sides of the sliding surfaces. Accordingly, it is possible to provide a sliding seismic isolation device with high seismic isolation performance while realizing a contact pressure of 60 MPa.

### Brief Description of Drawings

Fig. 1 is a longitudinal sectional view of an embodiment of a sliding seismic isolation device of the present invention.
Fig. 2 is a perspective view of the sliding seismic isolation device seen obliquely from above while an upper shoe is removed.
Fig. 3 is a schematic view illustrating the structure of a double-woven fabric layer.
Fig. 4(a) is a schematic view showing the state before a double-woven fabric layer is subjected to a load, and Fig. 4(b) is a schematic view showing the state in which a double-woven fabric layer is subjected to pressure sliding force.
Fig. 5 is a diagram showing the experimental results that verify the repetition durability of a double-woven fabric layer.
Fig. 6 is a diagram showing the experimental results obtained with sliding seismic isolation devices with different own natural periods, which verify the shear coefficient and response displacement for each coefficient of kinetic friction.

### Description of Embodiments

Hereinafter, embodiments of a sliding seismic isolation device of the present invention will be described with reference to the drawings.

### (Embodiment of sliding seismic isolation device)

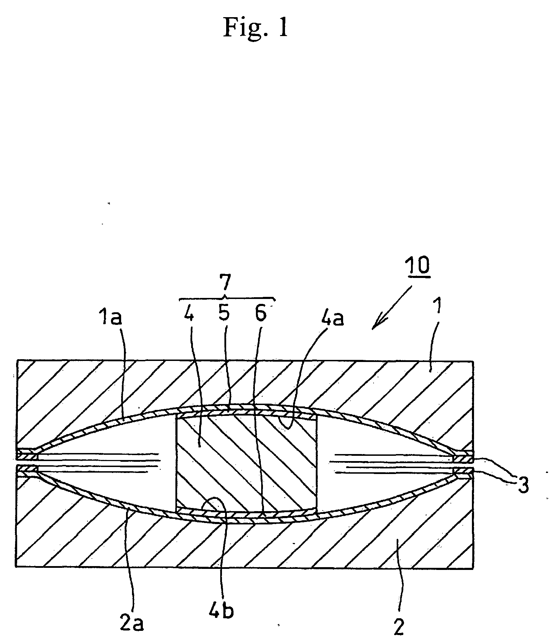

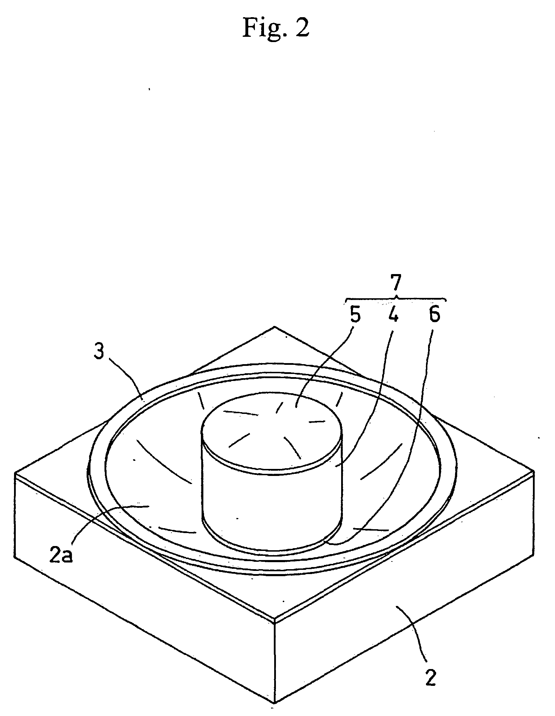

Fig. 1 is a longitudinal sectional view of an embodiment of a sliding seismic isolation device of the present invention. Fig. 2 is a perspective view of the sliding seismic isolation device seen obliquely from above while an upper shoe is removed.

A sliding seismic isolation device 10 shown in the drawing generally includes an upper steel shoe 1, which has a SUS sliding surface 1a with a curvature, a lower steel shoe 2, which also has a SUS sliding surface 2a with a curvature, and a slider 7, which is interposed between the upper shoe 1 and the lower shoe 2 and has a columnar steel body 4 having an upper surface 4a and a lower surface 4b that are in contact with the upper shoe 1 and the lower shoe 2 and have the same curvatures as the sliding surfaces 1a and 2a, respectively.

As shown in Fig. 2, an annular stopper 3 is fixed around the sliding surface 2a of the lower shoe 2, and an annular stopper 3 is also fixed around the sliding surface 1a of the upper shoe 1 (not shown in Fig. 2).

Each of the upper and lower shoes 1 and 2 and the body 4 of the slider 7 is formed of rolled steel for welding (SM490A,B,C, SN490B,C, or S45C), and has a load bearing strength with a contact pressure of 60 MPa.

The upper surface 4a and the lower surface 4b of the body 4 of the slider 7 have double-woven fabric layers 5 and 6 that are fixed thereon by adhesion, respectively.

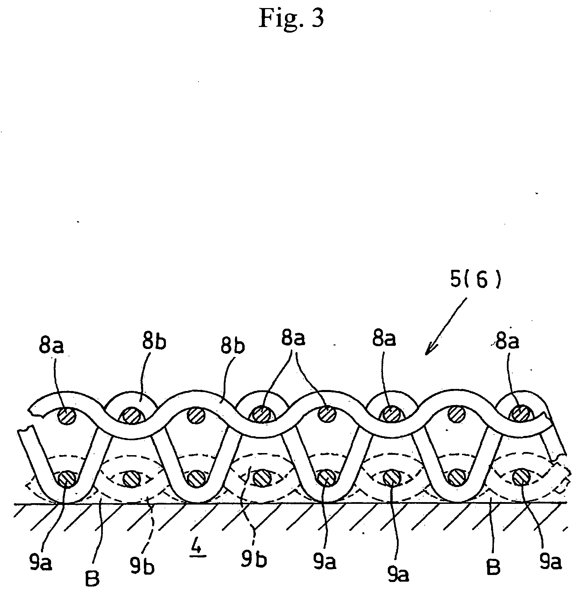

Herein, Fig. 3 is a schematic view illustrating the structure of a double-woven fabric layer. Each of the double-woven fabric layers 5 and 6 shown in the drawing is a double-woven fabric layer containing PTFE fibers and fibers with higher tensile strength than that of the PTFE fibers. The double-woven fabric layers 5 and 6 are fixed on the body 4 such that the PTFE fibers are arranged on the sides of the sliding surfaces 1a and 2a of the upper and lower shoes, respectively.

Examples of the "fibers with higher tensile strength than that of the PTFE fibers" include fibers of polyamide such as nylon 6,6, nylon 6, or nylon 4,6, polyester such as polyethylene terephthalate (PET), polytrimethylene terephthalate, polybutylene terephthalate, or polyethylene naphthalate, para-aramid, meta-aramid, polyethylene, polypropylene, glass, carbon, polyphenylenesulfide (PPS), LCP, polyimide, or PEEK. Alternatively, fibers such as thermal bonding fibers, cotton, or wool may also be applied.

Above all, PPS fibers with excellent chemical resistance and hydrolysis resistance as well as extremely high tensile strength are desirably used. Hereinafter, an embodiment in which each of the double-woven fabric layers 5 and 6 is formed of PTFE fibers and PPS fibers will be described as a representative example.

In the structures of the double-woven fabric layers 5 and 6 shown in Fig. 3, weft threads 9a of PPS fibers are arranged on the side of the body 4 of the slider 7, and warp threads 9b of PPS fibers are woven such that the weft threads 9a are woven into the warp threads 9b. Weft threads 8a of PTFE fibers are arranged above the weft threads 9a and the warp threads 9b (at the position on the shoe side), and the warp threads 8b of PTFE fibers are woven such that the weft threads 8a are woven into the warp threads 8b. Thus, the PTFE fibers are arranged on the sides of the sliding surfaces 1a and 2a of the upper and lower shoes, thereby forming the double-woven fabric layers 5 and 6.

Such double-woven fabric layers 5 and 6 are fixed on the body 4 by adhesion via an adhesive B. As the adhesive, an epoxy resin adhesive can be applied. As the PPS fibers have significantly higher adhesion to the surface of the steel body 4 than the PTFE fibers have, it would be advantageous to apply the double-woven fabric layers 5 and 6 such that the PTFE fibers are arranged on the sides of the sliding surfaces 1a and 2a of the shoes, and the PPS fibers are arranged on the side of the body 4 of the slider 7.

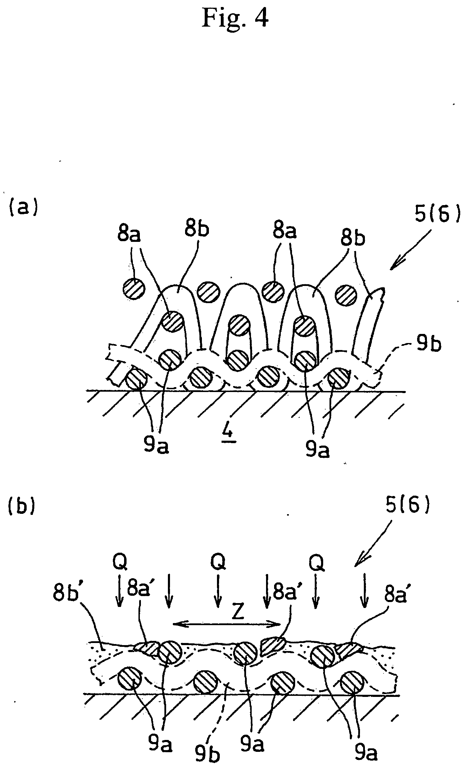

In addition, as the PTFE fibers have relatively low tensile strength, such fibers are easily squashed when subjected to repetitive vibrations (i.e., pressure sliding force) in the state in which the double-woven fabric layers 5 and 6 are pressed. However, the squashed PTFE fibers remain in the fibers that have relatively higher tensile strength than that of the PTFE fibers and thus have higher squash resistance, at least some of the PTFE fibers can face the sliding surfaces 1a and 2a of the upper and lower shoes 1 and 2. Thus, excellent slidability of the PTFE fibers can be provided. This will be described with reference to Figs. 4a and 4b.

Fig. 4a is a schematic view showing the state before the double-woven fabric layer is subjected to a load, and Fig. 4b is a schematic view showing the state in which the double-woven fabric layer is subjected to pressure sliding force.

In the state of Fig. 4a, only the weft threads 8a and the warp threads 8b of PTFE fibers face the sliding surfaces 1a and 2a of the upper and lower shoes 1 and 2.

When pressure sliding force that allows repeated vibrations Z to act is provided in the state in which the double-woven fabric layers 5 and 6 are subjected to the pressure Q, the weft threads 8a and the warp threads 8b of the PTFE fibers are squashed through a given number of repetitions. As shown in Fig. 4b, weft threads 8a' of the squashed PTFE fibers and warp threads 8b' of the squashed PTFE fibers enter into the weft threads 9a and the warp threads 9b of the PPS fibers with high tensile strength and thus high squash resistance.

As is clear from Fig. 4b, some of the weft threads 8a' and the warp threads 8b' of the squashed PTFE fibers, which have entered into the weft threads 9a and the warp threads 9b of the PPS fibers, face the sides of the sliding surfaces 1a and 2a of the upper and lower shoes 1 and 2. Thus, excellent slidability of the PTFE fibers can be provided even in the state of Fig. 4b. That is, as the slider 7 has the double-woven fabric layers 5 and 6 with the configurations shown in the drawing, it is possible to improve the durability of the sliding seismic isolation device with desired seismic isolation performance.

Herein, Table 1 below shows an example of the materials, specifications, and physical management values of the double-woven fabric layer.

**[Table 1]**

| Specifications | Item | Physical Management Value | Remarks |
|---|---|---|---|
| PTFE and PPS | Weight per Unit Area (g/m²) | 380 ± 40 | |
| | Thickness (mm) | 0.3 to 0.6 | |
| | Coefficient of Kinetic Friction: µ | 0.01 to 0.1 | Based on Measurement Method of JIS K 7218 |

The own natural period of the sliding seismic isolation device is determined by the radius of curvature of each of the upper and lower surfaces of the slider 7 (and the radius of curvature of each of the sliding surfaces of the upper and lower shoes). When the radius of curvature is 2500 mm, the own natural period T of the sliding seismic isolation device is 4.5 seconds, and when the radius of curvature is 4500 mm, the own natural period T of the sliding seismic isolation device is 6 seconds.

According to the sliding seismic isolation device 10 shown in the drawing, a contact pressure of 60 MPa is realized by the steel slider 7, and the slider 7 has a structure in which the double-woven fabric layers 5 and 6, which contain PTFE fibers and PPS fibers with higher tensile strength than that of the PTFE fibers, are arranged on the upper and lower surfaces of the slider 7, respectively, such that the PTFE fibers are arranged on the sides of the sliding surfaces 1 a and 2a of the upper and lower shoes 1 and 2. Thus, a sliding seismic isolation device with a high seismic isolation effect, which is achieved by the excellent slidability, and high durability can be provided.

### [Experiments of verifying the repetition durability of the double-woven fabric layers and results thereof]

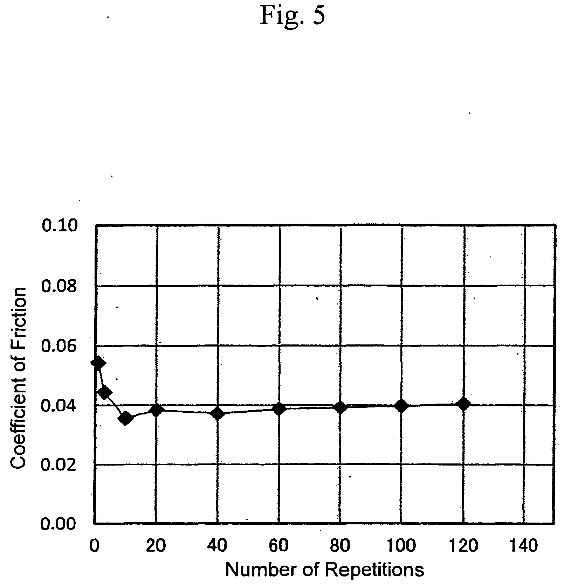

The inventors produced the sliding seismic isolation device of the present invention (in which the reference value of the coefficient µ of kinetic friction is 0.045 to 0.05), and conducted repetition durability tests at 20 °C at a rate of 400 mm/sec in the state in which the sliding seismic isolation device is subjected to a load of 60 MPa. Table 2 below and Fig. 5 show each cycle count up to 120 repetitions and fluctuation (measurement value) of the coefficient of kinetic friction.

**[Table 2]**

| Number of Cycles | Coefficient of Friction | Rate of Change with respect to 3rd Cycle |
|---|---|---|
| 1 | 0.0544 | 1.225 |
| 3 | 0.0444 | 1.000 |
| 10 | 0.0357 | 0.803 |
| 20 | 0.0384 | 0.864 |
| 40 | 0.0372 | 0.838 |
| 60 | 0.0388 | 0.873 |
| 80 | 0.0393 | 0.884 |
| 100 | 0.0398 | 0.896 |
| 120 | 0.0405 | 0.912 |

Table 2 and Fig. 5 can confirm that frictional heat increases the temperature in accordance with the number of repetitions, and the coefficient of friction tends to decrease with the increase in temperature; however, the temperature increase stops after a given time has elapsed, and conversely, the coefficient of friction tends to slightly increase due to degradation resulting from the repetition. The present test results show that there is only little degradation as the temperature increase is as large as about 40 °C and the coefficient of friction has thus become small.

### [Analysis conducted with sliding seismic isolation devices with different own natural periods to verify the shear coefficient and response displacement for each coefficient of kinetic friction, and results thereof]

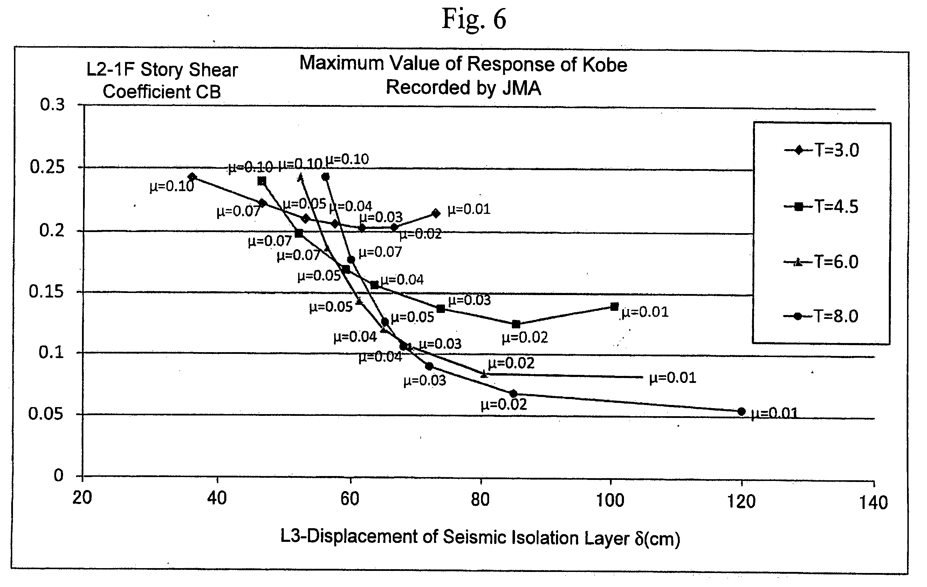

The inventors further modeled a variety of sliding seismic isolation devices with different own natural periods on a computer, and conducted experiments of verifying the shear coefficient and response displacement for each coefficient of kinetic friction for the sliding seismic isolation devices. Fig. 6 shows the experimental results.

In the drawing, symbol L2 represents an earthquake ground motion of level 2, and the shear coefficient CB represents the shear coefficient of the first floor of a multi-level construction model. Symbol L3 represents an earthquake ground motion of level 3, which is an earthquake ground motion with a level 1.5 times that of the earthquake ground motion of level 2 (the response displacement corresponds to the sum of the value in response to L3 and a margin). The response displacement when an earthquake of L3 occurs was used as the response displacement. In the present analysis, the waveforms of the earthquake of the south part of Hyogo prefecture in 1995, recorded by the JMA (Japan Meteorological Agency), was used as the earthquake waves.

Fig. 6 can confirm that a sliding seismic isolation device with an own natural period of T = 3.0 seconds has a shear coefficient CB of over 0.2 regardless of the coefficient µ of kinetic friction, and thus has a low seismic isolation effect.

Meanwhile, seismic isolation devices with own natural periods of T = 4.5 seconds, 6.0 seconds, and 8.0 seconds each have a response displacement of greater than or equal to 80 cm when the coefficient µ of kinetic friction is less than or equal to 0.02, which is not preferable in terms of the production cost. In addition, the seismic isolation device with each own natural period has a shear coefficient CB of less than 0.2 and a response displacement of less than 80 cm when the coefficient µ of kinetic friction is in the range of 0.03 to 0.07. Thus, with respect to the sliding seismic isolation devices with own natural periods of T = 4.5 seconds, 6.0 seconds, and 8.0 seconds, the coefficient µ of kinetic friction is preferably in the range of 0.03 to 0.07.

More specifically, when the own natural period T is 4.5 seconds, the response displacement δ can be controlled to about 60 cm if the coefficient µ of kinetic friction is in the range of 0.04 to 0.05; when the own natural period T is 6 seconds, the response shear coefficient CB can be less than 0.15 and the response displacement δ can be less than 70 cm if the coefficient µ of kinetic friction is in the range of 0.03 to 0.05; and when the own natural period T is 8 seconds, the response shear coefficient CB can be less than 0.15 and the response displacement δ can be less than 70 cm if the coefficient µ of kinetic friction is in the range of 0.04 to 0.05. All of such ranges are more preferable.

Although the embodiments of the present invention have been described in detail with reference to the drawings, specific structures are not limited thereto.

### Reference Signs List

- 1: Upper shoe
- 1a: Sliding surface
- 2: Lower shoe
- 2a: Sliding surface
- 3: Stopper
- 4: Body (body of slider)
- 4a: Upper surface
- 4b: Lower surface
- 5,6: Double-woven fabric layer
- 7: Slider
- 8a: Weft threads of PTFE fibers
- 8a': Weft threads of squashed PTFE fibers
- 8b: Warp threads of PTFE fibers
- 8b': Warp threads of squashed PTFE fibers
- 9a: Weft threads of PPS fibers
- 9b: Warp threads of PPS fibers
- 10: Sliding seismic isolation device

## Claims

1. A sliding seismic isolation device (10) comprising:
an upper shoe (1) and a lower shoe (2), the upper and lower shoes each having a sliding surface with a curvature (1a, 2a); and
a columnar steel slider (7) disposed between the upper and lower shoes, the slider having an upper surface (4a) and a lower surface (4b) that are in contact with the upper and lower shoes, respectively, and have curvatures, **characterised in that**
each of the upper and lower surfaces of the slider has a double-woven fabric layer (5, 6), the double-woven fabric layers containing PTFE fibers (8a-b) and fibers with higher tensile strength than that of the PTFE fibers (9a-b), and the PTFE fibers being arranged on the sides of the double-woven fabric layers that face the sliding surfaces of the upper and lower shoes.

2. The sliding seismic isolation device according to claim 1, wherein the fibers with higher tensile strength than that of the PTFE fibers are PPS fibers.

3. The sliding seismic isolation device according to claim 2, wherein the own natural period T when the slider slides on the sliding surfaces is in a range of 4.5 to 8 seconds, and a coefficient µ of kinetic friction between the sliding surfaces and the slider is in a range of 0.03 to 0.07.

4. The sliding seismic isolation device according to claim 3, wherein the coefficient µ of kinetic friction when the own natural period T is 4.5 seconds is in a range of 0.04 to 0.05.

5. The sliding seismic isolation device according to claim 3, wherein the coefficient µ of kinetic friction when the own natural period T is 6 seconds is in a range of 0.03 to 0.05.

6. The sliding seismic isolation device according to claim 3, wherein the coefficient µ of kinetic friction when the own natural period T is 8 seconds is in a range of 0.04 to 0.05.

## Patentansprüche

1. Gleitende seismische Isolationsvorrichtung (10), umfassend:
ein oberes Basiselement (1) und ein unteres Basiselement (2), wobei das obere und das untere Basiselement jeweils eine Gleitoberfläche mit einer Krümmung (1a, 2a) aufweisen; und
ein säulenförmiges Stahlgleitelement (7), das zwischen dem oberen und dem unteren Basiselement angeordnet ist, wobei das Gleitelement eine obere Fläche (4a) und eine untere Fläche (4b) aufweist, die mit dem oberen beziehungsweise dem unteren Basiselement in Berührung sind und Krümmungen aufweisen, **dadurch gekennzeichnet, dass**
jede der oberen und der unteren Fläche des Gleitelements eine doppelt gewebte Gewebeschicht (5, 6) aufweist, wobei die doppelt gewebten Gewebeschichten PTFE-Fasern (8a-b) sowie Fasern mit höherer Zugfestigkeit als der der PTFE-Fasern (9a-b) enthalten, und wobei die PTFE-Fasern an den Seiten der doppelt gewebten Gewebsschichten angeordnet sind, die den gleitenden Flächen des oberen und unteren Basiselements zugewandt sind.

2. Gleitende seismische Isolationsvorrichtung nach Anspruch 1, worin die Fasern mit höherer Zugfestigkeit als der der PTFE-Fasern PPS-Fasern sind.

3. Gleitende seismische Isolationsvorrichtung nach Anspruch 2, worin deren eigene natürliche Periode T, wenn das Gleitelement auf den Gleitoberflächen gleitet, in einem Bereich von 4,8 bis 8 Sekunden ist, und ein Koeffizient µ der Gleitreibung zwischen den Gleitoberflächen und dem Gleitelement in einem Bereich von 0,03 bis 0,07 ist.

4. Gleitende seismische Isolationsvorrichtung nach Anspruch 3, worin der Koeffizient µ der Gleitreibung in einem Bereich von 0,04 bis 0,05 ist, wenn die eigene natürliche Periode T 4,5 Sekunden ist.

5. Gleitende seismische Isolationsvorrichtung nach Anspruch 3, worin der Koeffizient µ der Gleitreibung in einem Bereich von 0,03 bis 0,05 ist, wenn die eigene natürliche Periode T 6 Sekunden ist.

6. Gleitende seismische Isolationsvorrichtung nach Anspruch 3, worin der Koeffizient µ der Gleitreibung in einem Bereich von 0,04 bis 0,05 ist, wenn die eigene natürliche Periode T 8 Sekunden ist.

## Revendications

1. Dispositif d'isolation sismique à coulissement (10), comprenant :
un patin supérieur (1) et un patin inférieur (2), les patins supérieur et inférieur ayant chacun une surface de coulissement incurvée (1a, 2a) ; et
un corps de coulissement colonnaire en acier (7) disposé entre les patins supérieur et inférieur, le corps de coulissement ayant une surface supérieure (4a) et une surface inférieure (4b) qui sont en contact avec les patins supérieur et inférieur, respectivement, et qui sont incurvées, caractérisé en ce
chacune des surfaces supérieure et inférieure du corps de coulissement comporte une couche de tissu à double tissage (5, 6), les couches de tissu à double tissage contenant des fibres de PTFE (8a-b) et des fibres ayant une plus grande résistance à la traction que celle des fibres de PTFE (9a-b), et les fibres de PTFE étant disposées sur les côtés des couches de tissu à double tissage qui font face aux surfaces de coulissement des patins supérieur et inférieur.

2. Dispositif d'isolation sismique à coulissement selon la revendication 1, dans lequel les fibres ayant une résistance à la traction supérieure à celle des fibres de PTFE sont des fibres de PPS.

3. Dispositif d'isolation sismique à coulissement selon la revendication 2, dans lequel la période naturelle propre T durant laquelle le corps de coulissement coulisse sur les surfaces de coulissement est dans une plage de 4,5 à 8 secondes, et un coefficient de frottement cinétique µ entre les surfaces de coulissement et le corps de coulissement se trouve dans une plage de 0,03 à 0,07.

4. Dispositif d'isolation sismique à coulissement selon la revendication 3, dans lequel le coefficient de frottement cinétique µ lorsque la période naturelle propre T est de 4,5 secondes est dans une plage de 0,04 à 0,05.

5. Dispositif d'isolation sismique à coulissement selon la revendication 3, dans lequel le coefficient de frottement cinétique µ lorsque la période naturelle propre T est de 6 secondes est dans une plage de 0,03 à 0,05.

6. Dispositif d'isolation sismique à coulissement selon la revendication 3, dans lequel le coefficient de frottement cinétique µ lorsque la période naturelle propre T est de 8 secondes est dans une plage de 0,04 à 0,05.
